# EUROPEAN PATENT APPLICATION

(11) **EP 1 731 041 A1**
(43) Date of publication of application: **13.12.2006**
(21) Application number: 05727566.1
(22) Date of filing: 29.03.2005
(51) Int. Cl.: A23J 3/34, A23J 3/16, A23L 1/314

(54) **PROCESS FOR PRODUCING SOYBEAN PROTEIN AND PROCESS FOR PRODUCING PROCESSED MEAT FOOD USING THE SOYBEAN PROTEIN**

(30) Priority: 30.03.2004 JP 2004100089; 14.05.2004 JP 2004144405
(71) Applicant: Fuji Oil Company, Ltd., Osaka-shi, Osaka 542-0086 (JP)
(72) Inventor: KATO, Hiroyuki; c/o Fuji Oil Company, Limited,, Osaka; 5988540 (JP); SAKATA, Tetsuo; c/o Fuji Oil Company, Limited,, Osaka; 5988540 (JP); KATSUMARU, Hiroko; c/o Fuji Oil Company, Limited,, Osaka; 5988540 (JP)
(74) Representative: Hayes, Adrian Chetwynd
(86) International application number: PCT/JP2005/005852
(87) International publication number: WO 2005/094608

(57) **Abstract**

The present invention aims to provide a process for producing a soybean protein wherein transglutaminase is used to improve both the gel property and the emulsifying property. Namely, it is a process for producing a soybean protein comprising treating a soybean protein solution or soybean protein slurry with transglutaminase, wherein a heat treatment is performed before or after the treatment with transglutaminase.

## Description

### Technical Field

The present invention relates to a process for producing a powdery soybean protein which is suitable for being kneaded into processed meat foods and to a process for producing a processed meat food by utilizing said soybean protein.

### Background Art

In fish meat kneaded products and livestock processed meat products including boiled fish paste (Kamaboko), tubular rolls of boiled fish paste (Chikuwa), ham and sausage, a part of fish meat or livestock meat has conventionally been replaced by vegetable protein whose representative example is soybean protein, for the purpose of an improvement in material quality, stabilization of cost, an improvement in yield, and the like. In this regard, the soybean protein is required to have gelation ability, emulsification ability and the like.

On the other hand, a method for reforming food proteins by crosslinking with the use of transglutaminase is known. This enzyme serves to catalyze acyl transfer reaction in the γ-carboxamide groups of glutamine residues present in a peptide chain. Transglutaminase acts on the ε-amino groups of lysine residues present in protein which are receptors for the acyl groups, and thereby ε-(γ-Glu)-Lys crosslinking bonds are formed in and between protein molecules. When water functions as a receptor for acyl groups, transglutaminase promotes a reaction wherein glutamine residues are deamidated to glutamic acid residues.

With regard to use of transglutaminase in soybean protein, as shown in JP-A 58-149645 and JP-A 1-27471, transglutaminase has been used to improve the gel property of soybean protein so that the resulting gel has hardness and elasticity.

However, although the simple use of transglutaminase in a process of producing a soybean protein can improve the gel property of the resulting soybean protein, the resulting soybean protein can not exert the functions of soybean protein (gelation ability, emulsification ability and the like) in processed meat foods such as sausage. This is probably because the emulsifying property of the soybean protein is not improved.

In other words, the inventors of the present invention, as a result of their studies, found that a soybean protein obtained by utilizing transglutaminase in a conventional manner was improved in its gel property but deteriorated in its emulsifying property and therefore the conventional soybean protein did not have such improved properties as firm up the texture of processed meat foods such as sausage.

In a usual sterilization step of a process for producing a soybean protein, in order to suppress deterioration in gel property caused by the denaturation of protein accompanying the sterilization as much as possible, soybeans are usually subjected to only the minimum heat history required for sterilization. JP-A 2-257831 discloses that a soybean protein solution is treated with transglutaminase and then sterilized by heating and an example thereof is thermal sterilization at 120°C for 10 seconds. JP-A 4-63548 states that a soybean protein is treated with transglutaminase and then heated at a temperature higher than the sterilization temperature disclosed in JP-A 2-257831. In JP-A 4-63548, thermal sterilization at 70 to 200°C for 2 seconds to 10 minutes, preferably 100 to 150°C for 5 seconds to 5 minutes is used.

However, the soybean protein used in JP-A 4-63548 is an insolubilized and curdled soybean protein like tofu because of coagulation with an alkaline earth metal such as Ca. Thus, even though said soybean protein is treated with transglutaminase to try to solubilize it and recover its gelation ability, the resulting soybean protein has low gelation ability and low emulsification ability, but the color may be whitened. Therefore, the soybean protein obtainable in JP-A 4-63548 is different from that of the present invention which is water-soluble and has both of gelation ability and emulsification ability.

As described above, even if the techniques disclosed in JP-A 2-257831 and JP-A 4-63548 are used, it is very difficult to sufficiently compensate for deterioration in the emulsification ability of soybean protein caused by transglutaminase reaction.

### (References)

JP-A 58-149645
JP-A 1-27471
JP-A 2-257831
JP-A 4-63548
JP-B 1-50382
JP-A 1-300889

Kumazawa, Y., Seguro, K., Takamura, M., and Motoki, M. (1993) J. Food Sci. 58, 1062-1065.

Saishin Igaku, 21, 622-627 (1966).

"Abstracts of Autumn Meeting in 1988, the Japanese Society of Fisheries Society", p167.

"Abstracts of Spring Meeting in 1990, the Japanese Society of Fisheries Society", p219.

### Disclosure of Invention

### Problems to be solved by the Invention

An object of the present invention is to obtain a soybean protein having not only improved gelation ability but also improved emulsification ability by utilizing transglutaminase. A further object of the present invention is to improve the physical property of a processed meat food such as sausage so that its texture becomes firm but tender, that is, becomes closer to that of real meat.

### Means for solving the problem

The inventors of the present invention intensively and repeatedly studied to solve the above described problem, and as a result, found that the above described objects can be attained by heating acid-precipitated curd slurry of defatted soybean milk or a neutralized solution thereof and then treating the slurry or solution with transglutaminase.

The inventors also found that the above described problem can be solved by subjecting defatted soybean milk or a soybean protein solution prepared by subjecting defatted soybean milk to isoelectric precipitation and then collecting and neutralizing an acid-precipitated curd to a transglutaminase treatment until a specific reacting state is attained, and then to a sterilization treatment with a specific high-temperature heat history.

The inventors of the present invention found that use of the soybean protein thus obtained can improve the texture of processed meat foods to become closer to that of real meat.

The inventors of the present invention completed the present invention based on such findings.

Accordingly, the present invention provides a process for producing a soybean protein comprising treating a soybean protein solution or soybean protein slurry with transglutaminase, wherein a heat treatment is performed before or after the treatment with transglutaminase.

The soybean slurry is preferably acid-precipitated slurry obtained by extracting defatted soybean milk from defatted soybeans with water and then subjecting the defatted soybean milk to isoelectric precipitation.

The soybean protein solution is preferably obtained by extracting defatted soybean milk from defatted soybeans with water, subjecting the defatted soybean milk to isoelectric precipitation, followed by neutralization.

The heat treatment before the transglutaminase treatment is preferably performed at 70 to 210°C for 1 second to 60 minutes.

The heat treatment after the transglutaminase treatment is preferably performed at 100 to 200°C for 20 to 80 seconds.

When the heat treatment is performed after the transglutaminase treatment, transglutaminase preferably acts to such an extent that the number of Glu-Lys bonds existing in 1 g of the soybean protein is 10¹⁰ to 10²⁵ after the transglutaminase reaction.

The present invention also provides a process for producing a processed meat food which comprises mixing and molding the soybean protein produced by any one of the above described processes and a meat raw material, followed by heating.

A soybean protein, meat and water are blended and chopped, stuffed into a casing, and then heated, whereby a processed meat food can be produced.

### Effect of the Invention

According to the process of the present invention, it is possible to produce a soybean protein having satisfactory gelation ability and satisfactory emulsification ability.

According to the present invention, it is possible to produce a soybean protein which can reflect its high gelation ability and its high emulsification ability on the properties of sausage containing said soybean protein, without using a general method that has been used for improving the properties of soybean protein, which is costly and places a large burden on the environment, such as a dry/wet heating treatment or a washing treatment of acid-precipitated curds with water.

The present invention ensures that when the soybean protein of the present invention is used in processed meat foods including sausage, it exerts both its gelation ability and its emulsification ability, so that the processed meat foods can have firm texture which is closer to that of real meat and a high-quality feel.

### Best Mode for Carrying Out the Invention

First, as to a process for producing a soybean protein comprising treating a soybean protein solution or soybean protein slurry with transglutaminase, the process for producing a soybean protein wherein a heat treatment is performed before the treatment with transglutaminase will be explained.

The process wherein a heat treatment is performed after the treatment with transglutaminase will be explained later.

A soybean protein solution for use in the present invention includes defatted soybean milk and a soybean protein solution prepared by neutralizing the acid-precipitated curd of defatted soybean milk with an alkali metal compound.

The defatted soybean milk can be obtained by adding water to defatted soybeans, turning the mixture into the slurry form by stirring or the like, and then separating the slurry into bean curd lees and defatted soybean milk by centrifugation or the like. Other solid-liquid separation means such as filtration can be also utilized.

The soybean protein solution can be a soybean protein solution prepared by subjecting the defatted soybean milk to isoelectric precipitation, for example, by an addition of an acid, removing whey from the resulting precipitated slurry, and then neutralizing the remaining soybean protein precipitate. It is important that an alkali used for the neutralization is an alkali metal compound such as NaOH or KOH. An alkaline earth metal compound such as Ca(OH)₂ or Mg(OH)₂ is undesirable because soybean protein is coagulated like tofu by the action of an alkaline earth metal compound, and the soybean protein thus coagulated can recover only a part of its gelation ability and can not recover its emulsification ability even if the subsequent transglutaminase treatment or high-temperature heat treatment is performed.

Defatted soybeans for use in the present invention include low-denatured defatted soybeans which remain after soybean oil is squeezed and extracted with a solvent from soybeans.

Soybean protein slurry for use in the present invention includes slurry obtained by adding water to defatted soybeans, slurry obtained by subjecting the above-described defatted soybean milk to isoelectric precipitation, and acid-precipitated slurry obtained by removing whey from the above-described slurry obtained by isoelectric precipitation and then adding water to the remaining acid-precipitated curd.

As to a specific example of a heat treatment used in the present invention, in the process of producing a powdery isolated soybean protein which comprises adding water to defatted soybeans to form slurry, removing bean cured lees from the slurry to obtain soybean milk, subjecting the soybean milk to isoelectric precipitation, removing whey, adding water to the acid-precipitated curd to form acid-precipitated slurry, neutralizing the acid-precipitated slurry to form a soybean protein solution, and then subjecting the soybean protein solution to spray drying or the like to obtain a powdery isolated soybean protein, a heat treatment may be performed in any step of the aqueous system before the spray drying. It is preferable to heat the acid-precipitated slurry prepared by extracting defatted soybean milk with water from defatted soybeans and subjecting the soybean milk to electric precipitation, or the soybean protein solution prepared by neutralizing the acid-precipitated slurry.

The dry solid concentration of the acid-precipitated slurry is 25% by weight or less, preferably 15% by weight or less. The lower limit of the solid content concentration may be 1% or less, and it is suitably 10% by weight or more in view of production cost.

The dry solid concentration of the neutralized soybean protein solution is, in view of increase in viscosity, 20% by weight or less, preferably 15% by weight or less. The lower limit of the solid concentration may be less than 1%, and it is suitably 10% by weight or more in view of production cost.

The heat treatment can be usually attained by indirect heating or direct steam blowing heating at 70 to 210°C for 1 second to 60 minutes, and it is suitably attained by direct steam blowing heating at 100 to 160°C for 1 second to 60 seconds. Insufficient heating results in the insufficient thermal denaturation of protein, whereas excessive heating results in the excessive thermal denaturation of protein, producing adverse effects including deterioration in the properties (gelation ability and emulsification ability) on the protein.

In the present invention, it is appropriate to perform a transglutaminase treatment after the heat treatment as described above.

If any one of the heat treatment and the transglutaminase treatment lacks, a soybean protein having both of satisfactory gelation ability and satisfactory emulsification ability can not be obtained.

If the above-described heat treatment is not performed or the heating is insufficient, the emulsification ability of the resulting soybean protein is greatly reduced although the gelation ability is sufficient, even after a transglutaminase treatment is performed. Therefore, when such a soybean protein is used in sausage, it can not exert the functions of soybean protein as described above in the sausage.

Then, performing a transglutaminase treatment after a heat treatment is performed as described above will be explained.

Transglutaminase for use in the present invention includes a calcium independent type and a calcium dependent type. Examples of the former type include transglutaminase derived from microorganisms (see, for example, JP-A 1-27471). Examples of the latter type include transglutaminase derived from the liver of a guinea pig (see, for example, JP-A 1-50382) and transglutaminase derived from fish (see, for example, "Abstracts of Autumn Meeting in 1988, the Japanese Society of Fisheries Society", p167 and "Abstracts of Spring Meeting in 1990, the Japanese Society of Fisheries Society", p219). Another example of transglutaminase for use in the present invention includes those produced by using gene recombination (see, for example, JP-A 1-300889). Transglutaminase for use in the present invention may be any transglutaminase and is not limited by the origin or the production method. However, transglutaminase independent of calcium is preferred from the viewpoint of functionality and economic efficiency, and an example thereof is the aforementioned transglutaminase derived from microorganisms (JP-A 1-27471).

The unit of transglutaminase activity as used herein is measured and defined as follows. Benzyloxycarbonyl-L-glutaminylglycine and hydroxylamine are used as substrates and a reaction is performed to produce hydroxamic acid. In the presence of trichloroacetic acid, an iron complex is formed from the hydroxamic acid produced. Then, the absorbance of the iron complex is measured at 525 nm and a calibration curve is made. The amount of hydroxamic acid is determined by the calibration curve and then, the activity is calculated (see, for example, JP-A 1-27471).

As described above, it is preferable that before the transglutaminase treatment, defatted soybean milk extracted with water from defatted soybeans is subjected to electric precipitation and then heated, or defatted soybean milk extracted with water from defatted soybeans is subjected to electric precipitation, neutralized and then heated.

The amount of transglutaminase to be added is as follows, based on the crude protein amount in the soybean milk.

For example, the transglutaminase may be used in an amount range as wide as 0.01 to 100 units (U) per 1 g of crude protein in the defatted soybean milk. However, once the protein solution is heated, the viscosity of the protein solution tends to increase due to the action of transglutaminase, and if the reaction proceeds excessively, gelation occurs. Therefore, when used in large-scale production of soybean protein, the amount of transglutaminase to be added is preferably less than 1.0 U, more preferably 0.05 to 0.7 U. When the amount of the transglutaminase is less than 0.01 U, the effect of improving gel property is insufficient. When the amount of the transglutaminase exceeds 100 U, it is difficult to control the reaction.

In the present invention, the temperature of the transglutaminase treatment is 20 to 80°C, preferably 40 to 60°C. When the temperature is less than 20°C, the enzymatic reaction is slower. When the temperature exceeds 80°C, deactivation of an enzyme is promoted.

In the present invention, the time of the transglutaminase treatment is 0.01 to 120 minutes, preferably 1 to 60 minutes. When the reaction time is extremely short, the effect of the reaction is insufficient. When the reaction time is long, the viscosity of the reaction solution is increased and further, proliferation of bacteria is induced in the solution and therefore there is a fear that the solution decays.

In the present invention, after the defatted soybean milk acid-precipitated curd or its neutralized product is treated with transglutaminase, it can be sterilized by a known thermal sterilization and dried by drying means such as spray drying to obtain a powdery soybean protein.

In the case that the acid-precipitated slurry is used, it is neutralized to form a soybean protein solution, which can be subjected to spray-drying or the like to produce a powdery soybean protein.

In the case that the soybean protein solution is used, it can be directly subjected to spray-drying or the like to produce a powdery soybean protein.

Next, as to a process for producing a soybean protein comprising treating a soybean protein solution or soybean protein slurry with transglutaminase, the process for producing a soybean protein wherein a heat treatment is performed after the treatment with transglutaminase will be explained.

The above-described soybean protein solution and soybean protein slurry can be used in the present invention. In the case of heating after a treatment with transglutaminase, the soybean protein solution is preferred to the soybean protein slurry.

The soybean protein solution is suitably, as described above, defatted soybean milk or a soybean protein solution prepared by neutralizing the acid-precipitated curd of defatted soybean milk with an alkali metal compound.

The above-described transglutaminase can be used in the present invention.

In the present invention, when the defatted soybean milk or the soybean protein solution is treated with transglutaminase, transglutaminase appropriately acts to such an extent that the number of Glu-Lys bonds existing in 1 g of the soybean protein is 10¹⁰ to 10²⁵, preferably 10¹⁵ to 10²¹ after the transglutaminase reaction. When the number of Glu-Lys bonds is too small, the gel property of the resulting soybean protein is not improved sufficiently. On the contrary, too large number of Glu-Lys bonds only inhibit the gel property from being improved but also greatly reduce the emulsification ability.

Here, the extent of the action of transglutaminase can be determined by measuring the number of bonds formed by the action of transglutaminase.

A method of measuring the number of bonds formed by the action of transglutaminase includes a method which comprises digesting a soybean protein with protease in such a way that only Gly-Lys bonds remain and then measuring the quantity of the bonds by HPLC (see Kumazawa, Y., Seguro, K., Takamura, M., and Motoki, M. (1993) J. Food Sci. 58, 1062-1065; Saishin Igaku, 21, 622-627 (1966); and "Abstracts of Autumn Meeting in 1988, the Japanese Society of Fisheries Society", p167), and a method which comprises measuring the quantity of ammonia produced by the transglutaminase reaction and then calculating the number of Glu-Lys bonds from the ammonia quantity, wherein one molecule of ammonia is released along with the formation of one Gly-Lys bond in the transglutaminase reaction. The inventors of the present invention adopted the latter method because a kit is commercially available.

Specifically, a deproteinizing reagent is added to a transglutaminase reaction solution of the soybean protein neutralized solution to remove proteins, whereby a coloring inhibitive component is removed and various enzymes including transglutaminase are deactivated. Phenol and sodium pentacyanonitrosylferrate (III) are added to the supernatant. When the mixture is alkalinized and then oxidized with sodium hypochlorite, it produces indophenol and turns blue. The absorbance of the blue color is measured to determine the concentration of the nitrogen of ammonia in the sample (Saishin Igaku, 21, 622-627 (1966)). From said concentration, the number of Glu-Lys formed by transglutaminase reaction is calculated based on the fact that one molecule of ammonia is released per one Gly-Lys bond.

In order to allow transglutaminase to act to the above-described extent, the amount of transglutaminase to be added to the defatted soybean milk or the soybean protein solution, the temperature, pH and time of the transglutaminase treatment and the like can be controlled. For example, the amount of transglutaminase to be used may be in the wide range of 0.01 to 100 units (U) per 1 g of the crude protein of the defatted soybean milk. Preferably, the amount of transglutaminase is 0.05 to 0.7 U. When the amount of transglutaminase exceeds 100 U, it is difficult to control the reaction. The temperature of the transglutaminase treatment is 0 to 80°C, preferably 40 to 60°C. The time of the transglutaminase treatment is 0.01 to 120 minutes, preferably 1 to 60 minutes. When the reaction time is extremely short, the reaction effect is insufficient. When the reaction time is long, the viscosity of the reaction solution is increased and further, proliferation of bacteria is induced in the solution and therefore there is a fear that the solution decays.

It is essential to attain the intended number of GluLys bonds by performing the transglutaminase treatment as described above. The conditions of the transglutaminase reaction can be appropriately controlled to attain the intended number of Glu-Lys bonds. The present invention can not provide the desired soybean protein only by allowing transglutaminase to act to the above-described extent, but it can provide the desired soybean protein by combining the above-described transglutaminase treatment with a high-temperature heat treatment as described below.

After the transglutaminase treatment, a heat treatment is performed.

The heat treatment can be performed at 100 to 200°C for 20 to 80 seconds, preferably at 130 to 160°C for 30 to 60 seconds. After soybean protein is modified by crosslinking, for example, soybean protein is treated with transglutaminase to form ε-(γ-Glu)-Lys crosslinking bonds, the soybean protein is thermally denatured by high-temperature heating to change its higher-order structure, and thereby the soybean protein has gelation ability and emulsification ability. Therefore, the high-temperature heat conditions used for the present invention are severer than heating temperature conditions used for the usual sterilization.

The heat treatment can be usually attained by indirect heating or direct steam blowing heating at 100 to 200°C for 20 second to 80 minutes, preferably 130 to 160°C for 30 to 60 seconds, as described above. It is suitably attained by direct steam blowing. Insufficient heating results in the insufficient thermal denaturation of protein, whereas excessive heating results in the excessive thermal denaturation of protein, producing adverse effects including deterioration in the properties (gelation ability and emulsification ability) on the protein. Particularly, the heating time is important. If the heating time is short, the desired effect is not obtained even at a high temperature.

As described above, a soybean protein having both of high gelation ability and high emulsification ability can be obtained only when the specific extent of the transglutaminase treatment is combined with the specific extent of the high-temperature heat treatment. Thus, if any one of the transglutaminase treatment and the heat treatment lacks, a soybean protein having both of satisfactory gelation ability and satisfactory emulsification ability can be obtained.

In other words, if the above-described heat treatment is not performed or the heating is insufficient, the emulsification ability of the resulting isolated soybean protein is greatly reduced although the gelation ability is sufficient, even after a transglutaminase treatment is performed. Therefore, when such a soybean protein is used in livestock processed meat foods including sausage, it can not exert the functions (gelation ability and emulsification ability) of isolated soybean protein in the foods.

In the present invention, after the defatted soybean milk acid-precipitated curd or its neutralized product is subjected to the transglutaminase treatment and the high-temperature heat history, it can be dried by known dry means such as spray drying to obtain a powdery isolated soybean protein.

As described above, according to the process of the present invention, it is possible to produce an isolated soybean protein having both of improved gelation ability and improved emulsification ability. Specifically, it is possible to produce a soybean protein which can reflect its improved properties on the properties of sausage containing the soybean protein, without using a general method that has been used for improving the gelation ability and the emulsification ability of soybean protein, which is costly and places a large burden on the environment, such as a dry/wet heating treatment or a washing treatment of acid-precipitated curds with water.

Next, a process for producing processed meat foods using the soybean protein obtained by the process of the present invention will be explained.

The present invention provides a process for producing a processed meat food which comprises mixing and molding the soybean protein produced by the above-described process and a meat raw material, and then heating it.

Specifically, a processed meat food can be produced by blending and chopping the above-described soybean protein, meat and water, stuffing the mixture into a casing, and then heating it.

Examples of the processed meat food include sausage, frankfurters and other meat products.

Meat for use in the present invention is suitably meat of birds or beast, particularly livestock meat, on which the above-described isolated soybean protein can exert its gelation ability and its emulsification ability. Particularly preferable examples of the meat materials include pork, beef and chicken without bones, pork chops, beef chops and pig fatbacks.

In the present invention, it is preferable that the meat is rich in fat or animal fat is added afterward in order to allow the soybean protein of the present invention to exert its gelation ability and its emulsification ability.

The amount of meat used in the present invention is 30 to 70% by weight, preferably 35 to 50% by weight of the processed meat food.

The soybean protein used in the present invention can be produced by the above-described process.

The amount of the soybean protein used in the present invention is 0.1 to 10% by weight, preferably 1 to 5% by weight of the processed meat food. If the amount of the soybean protein is too small, the functions of the soybean protein cannot be exerted. If the amount of the soybean protein is too large, there is a fear that the gel property of the soybean protein greatly reflects on the processed meat food and therefore the quality of the processed meat food is greatly changed. The amount of water to be blended in the present invention is 20 to 60% by weight, preferably 25 to 40% by weight of the livestock processed meat food. If the amount of water is too small, the hydration of the soybean protein does not proceed and therefore the functions of the soybean protein are not exerted. If the amount of water is too large, the texture of the processed meat food becomes soft and watery.

In the present invention, known food additives such as preservatives, flavors and colorants can be used.

Blending and chopping in the present invention can be attained by using known means such as a mixer and silent cutter.

A casing used in the present invention may be a known edible casing. Staffing into the casing can be attained by using a known stuffing machine for paste products or the like.

After a mixture of the ingredients is stuffed into a casing, the casing can be heated to produce the desired livestock processed meat food. The heat treatment can be performed at an internal temperature of 60 to 90°C, preferably 65°C to 80°C. If the temperature is too low, the effect of thermal sterilization is insufficient. If the temperature is too high, the quality of the processed meat food can not be maintained, for example, the texture becomes too hard, because the processed meat food is excessively heated.

In this way, processed meat foods including sausage and frankfurters can be produced.

As described above, the processed meat food produced using the soybean protein that is prepared by performing the heat treatment before or after the transglutaminase treatment according to the present invention retains the texture that meat originally has and is firm but easy to bite off, as compared with a processed meat food produced using an isolated soybean protein prepared without performing such treatments.

For example, when the obtained processed meat food is measured by a rheometer, the livestock processed meat food produced using the soybean protein that is prepared by performing the heat treatment and the transglutaminase treatment according to the present invention has an increased breaking load, as compared with a processed meat food produced using a soybean protein prepared without performing such treatments.

### Examples

Hereinafter, embodiment of the present invention will be explained by reference to Examples.
First, examples of the process in which the heat treatment is performed before the transglutaminase treatment will be exemplified.

### <Examples 1 to 4 and Comparative Examples 1 to 3>

To 100 parts by weight of low-denatured defatted soybeans was added 1000 parts by weight of water, and extraction was performed at 40°C for 30 minutes. After the extraction, bean curd lees were removed by centrifugation to obtain defatted soybean milk.

The defatted soybean milk was adjusted to pH 4.5 with hydrochloric acid to induce isoelectric precipitation. After centrifugation, to the resulting acid-precipitated curd was added water and then, sodium hydroxide was added to obtain a neutralized solution (solid content: 10% by weight).

Then, the neutralized solution was subjected to no treatment (Comparative Examples 1 and 2), or a direct steam heat treatment at 110°C for 10 seconds (Example 1), at 140°C for 10 seconds (Example 2) or at 140°C for 30 seconds (Example 3, and Comparative Example 3) to obtain a heat-untreated or heat-treated acid-precipitated curd neutralized solution.

To the heat-untreated or heat-treated acid-precipitated curd neutralized solution was added transglutaminase "TG-S Mild" (manufactured by Ajinomoto Co., Ltd.) in an amount of 0 U (no addition) (Comparative Examples 1 and 3) or 0.5 U (Examples 1 to 3, and Comparative Example 2) per 1 g of the crude protein, and kept at 50°C for 30 minutes for reaction. After heating at 140°C for 10 seconds, the reaction solution was subjected to spray drying to obtain each isolated soybean protein.

The gel property and the emulsifying property of the obtained isolated soybean protein were confirmed. For evaluation of gel property, a 18% solution of each soybean protein in water was heated at 80°C for 30 minutes and then, heat gel strength was measured by a rheometer (manufactured by Yamaden co., ltd.) (jelly strength measured using a plunger sphere with a diameter of 8 mm).

For evaluation of emulsifying property, 1 part of soybean oil was added to 4 parts of a 1% soybean protein solution containing 2% common salt, the mixture was stirred by a homogenizer, the resulting emulsion was diluted 500 fold with water, and then the absorbance was measured at 500 nm with an absorptiometer.

**(Table 1)**

| | Preheating | TG treatment | Jelly strength (g·cm) | Emulsifying property (OD500) |
|---|---|---|---|---|
| Example 1 | 110°C×10 sec. | ○ | 312 | 0.288 |
| Example 2 | 140°C×10 sec. | ○ | 289 | 0.295 |
| Example 3 | 140°C×30 sec. | ○ | 258 | 0.388 |
| Comparative Example 1 | - | - | 188 | 0.280 |
| Comparative Example 2 | - | ○ | 322 | 0.242 |
| Comparative Example 3 | 140°C ×30 sec. | ○ | 122 | 0.441 |

As seen in Table 1, the soybean protein which had been subjected to only the preheating treatment had increased emulsifying property but decreased gel property. The soybean protein which had been subjected to only the transglutaminase treatment had increased gel property but decreased emulsifying property. Performing a combination of the preheating treatment and the transglutaminase treatment could lead to improvement in both gel property and emulsifying property.

Each powdery soybean protein raw material soybean protein powder obtained in Examples 1 to 3 and Comparative Examples 1 to 3, lard and water were previously blended in the above-described ratio to obtain an emulsion curd (emulsion). The obtained emulsion curd, pig forefoot meat, minced chicken, lard, wheat flour and water were mixed in the ratio of 5 parts, 20 parts, 25 parts, 15 parts, 5 parts and 30 parts with cutting. Condiments were added to the mixture, which was further mixed. The mixture was stuffed into a collagen tube, dried at 65°C, smoked at 70°C and steamed at 75°C to obtain sausage (samples 1, 2, 3, 4 and 5).

The sausage samples 1 to 5 thus obtained were evaluated. The results are shown in Table 2. The texture of each sample was organoleptically evaluated by 10 panelists using five-point scale of 1 point to 5 points. The average of the scores of all panelists was calculated (as sausage is firmer and chewier, the score is higher). In order to analyze the texture of sausage, a texture analyzer "TA-XT2" (manufactured by Eiko Seiki) was used.

**(Table 2)**

| | Texture analysis | | | |
|---|---|---|---|---|
| | Organoleptic evaluation (score) | Loading | Cohesiveness | Adhesiveness |
| Example 1 | 2.9 | 254.3 | 0.448 | 113.9 |
| Example 2 | 3.4 | 283.8 | 0.447 | 135.4 |
| Example 3 | 4.8 | 329.7 | 0.480 | 158.3 |
| Comparative Example 1 | 2.2 | 247.5 | 0.446 | 110.4 |
| Comparative Example 2 | 1.7 | 220.1 | 0.431 | 94.9 |
| Comparative Example 3 | 2.6 | 250.2 | 0.447 | 111.8 |

As seen in Table 2, the soybean protein of Example 3 having both of gel property and emulsifying activity could particularly exert its functions in sausage containing it.

Next, the process in which the heat treatment is performed after the transglutaminase treatment will be explained.

### <Examples 5 and 6 and Comparative Examples 4 to 8>

To 100 parts by weight of low-denatured defatted soybeans was added 1000 parts by weight of water and extraction was performed at 40°C for 30 minutes. After the extraction, bean curd lees were removed by centrifugation to obtain defatted soybean milk. The defatted soybean milk was adjusted to pH 4.5 with hydrochloric acid to induce isoelectric precipitation. After centrifugation, to the resulting acid-precipitated curd was added water and then, sodium hydroxide was added to obtain a neutralized solution (Examples 5 and 6, and Comparative Examples 4 to 6). Or to the acid-precipitated curd before neutralization was added calcium hydroxide in an amount of 1% based on the solid content of the curd and then, sodium hydroxide was added to obtain a neutralized solution (Comparative Examples 7 and 8). Then, to the acid-precipitated curd neutralized solution was added transglutaminase ("TG-S Mild" manufactured by Ajinomoto Co., Ltd.) in an amount of 0 U (no addition) (Comparative Examples 4, 6 and 7) or 0.5 U (Examples 5 to 6, and Comparative Examples 5 and 8) per 1 g of the crude protein, and kept at 50°C for 30 minutes for reaction. Then, the solution was subjected to a direct steam heat treatment at 140°C for 10 seconds (Comparative Examples 4 and 5), at 140°C for 40 seconds (Example 5) or at 155°C for 50 seconds (Example 6, and Comparative Examples 6 to 8), followed by spray drying to obtain a soybean protein.

The number of Glu-Lys bonds, gel property and emulsifying property of the soybean protein thus obtained were confirmed. For determination of the Glu-Lys bond number, the number of ammonia molecules was quantitatively measured by using "Ammonia Test Wako" (manufactured by Wako Pure Chemical Industries Ltd.). From the measured number, the number of ammonia molecules that was not due to transglutaminase reaction was subtracted to obtain the number of ammonia molecules that was released by transglutaminase reaction, whereby the number of Glu-Lys bonds was calculated. For evaluation of gel property, a 18% solution of each soybean protein in water was heated at 80°C for 30 minutes and then, heat gel strength was measured by a rheometer (manufactured by Yamaden co., ltd.) (jelly strength measured using a plunger sphere with a diameter of 8 mm). For evaluation of emulsifying property, 1 part of soybean oil was added to 4 parts of a 1% soybean protein solution containing 2% common salt, the mixture was stirred by a homogenizer, the resulting emulsion was diluted 500 fold with water, and then the absorbance was measured at 500 nm with an absorptiometer.

**(Table 3)**

| | Heat treatment | Number of Glu-Lys bonds | Jelly strength (g·cm) | Emulsifying property |
|---|---|---|---|---|
| Example 5 | 140°C ×40 sec. | 2.69×10¹⁸ | 435.2 | 0.334 |
| Example 6 | 155°C ×50 sec. | 2.80×10¹⁸ | 398.2 | 0.360 |
| Comparative Example 4 | 140°C ×10 sec. | - | 173.8 | 0.311 |
| Comparative Example 5 | 140°C ×10 sec. | 3. 01×10¹⁸ | 409.0 | 0.233 |
| Comparative Example 6 | 155°C ×50 sec. | - | 118.9 | 0.401 |
| Comparative Example 7 | 155°C ×50 sec. | - | 168.2 | 0.224 |
| Comparative Example 8 | 155°C ×50 sec. | 2.87×10¹⁸ | 168.2 | 0.204 |

As seen in Table 3, the soybean protein which had been subjected to only the strong heat treatment had increased emulsifying property but decreased gel property. The soybean protein which had been subjected to only the transglutaminase treatment had increased gel property but decreased emulsifying property. Performing a combination of the heat treatment and the transglutaminase treatment could lead to improvement in both gel property and emulsifying property. An addition of calcium led to an extreme decrease in the emulsifying property although the gel property was restored by the transglutaminase treatment.

Each powdery soybean protein raw material soybean protein powder obtained in Examples 5 and 6 and Comparative Examples 4 to 6, lard and water were previously blended in the above-described ratio to obtain an emulsion curd (emulsion). The obtained emulsion curd, pig forefoot meat, minced chicken, lard, wheat flour and water were mixed in the ratio of 5 parts, 20 parts, 25 parts, 15 parts, 5 parts and 30 parts with cutting. Condiments were added to the mixture, which was further mixed. The mixture was stuffed into a collagen tube, dried at 65°C, smoked at 70°C and steamed at 75°C to obtain sausage (samples 6, 7, 8, 9 and 10).

The sausage samples 6 to 10 thus obtained were evaluated. The results are shown in Table 4. The texture of each sample was organoleptically evaluated by 10 panelists using five-point scale of 1 point to 5 points (higher score means that the sausage is firmer). The average of the scores of all panelists was calculated (as sausage is firmer and chewier, the score is higher). In order to analyze the texture of sausage, a texture analyzer "TA-XT2" (manufactured by Eiko Seiki) was used.

**(Table 4)**

| | Texture analysis | | | |
|---|---|---|---|---|
| | Organoleptic evaluation (score) | Loading | Cohesiveness | Adhesiveness |
| Example 5 | 3.9 | 262.1 | 0.467 | 122.4 |
| Example 6 | 4.1 | 281.3 | 0.475 | 133.6 |
| Comparative Example 4 | 2.2 | 244.1 | 0.448 | 109.3 |
| Comparative Example 5 | 1.7 | 218.3 | 0.438 | 95.6 |
| Comparative Example 6 | 2.5 | 247.0 | 0.445 | 109.9 |

As seen in Table 4, the soybean proteins of Examples 5 and 6 having both of gel property and emulsifying activity could particularly exert their functions in sausage containing them.

### Industrial Applicability

According to the present invention, it is possible to improve both the gelation ability and emulsification ability of soybean protein, and thereby processed meat foods containing said soybean protein can be given firm texture which is closer to that of real meat and a high-quality feel by a low-cost means.

## Claims

1. A process for producing a soybean protein comprising treating a soybean protein solution or soybean protein slurry with transglutaminase, wherein a heat treatment is performed before or after the treatment with transglutaminase.

2. The process according to Claim 1, wherein the soybean protein slurry is an acid-precipitated slurry prepared by extracting defatted soybean milk from defatted soybeans with water and then subjecting the defatted soybean milk to isoelectric precipitation.

3. The process according to Claim 1, wherein the soybean protein solution is a soybean protein solution prepared by extracting defatted soybean milk from defatted soybeans with water, subjecting the defatted soybean milk to isoelectric precipitation, removing whey, and then neutralizing the remaining precipitate.

4. The process according to Claim 1, wherein the heat treatment is performed at 70 to 210°C for 1 second to 60 minutes before the treatment with transglutaminase.

5. The process according to Claim 1, wherein the heat treatment is performed at 100 to 200°C for 20 seconds to 80 seconds after the treatment with transglutaminase.

6. The process according to Claim 5, wherein transglutaminase acts to such an extent that the number of Glu-Lys bonds existing in 1 g of the soybean protein is 10¹⁰ to 10²⁵ after the transglutaminase reaction.

7. A process for producing a processed meat food, which comprises mixing and molding the soybean protein produced by the process according to Claim 1 and a meat raw material, and then heating it.

8. The process for producing a processed meat food according to Claim 7, wherein a soybean protein, meat and water are blended and chopped, stuffed into a casing, and then heated.
